Europäisches Patentamt

European Patent Office

Office européen des brevets

(19)

(11) **EP 1 105 781 B1**

(12) **EUROPEAN PATENT SPECIFICATION**

(45) Date of publication and mention
of the grant of the patent:
**07.01.2004 Bulletin 2004/02**

(51) Int Cl.7: **G05B 9/02**

(86) International application number:
**PCT/US1999/018264**

(21) Application number: **99941064.0**

(22) Date of filing: **11.08.1999**

(87) International publication number:
**WO 2000/011524 (02.03.2000 Gazette 2000/09)**

(54) **RESISTANCE BASED PROCESS CONTROL DEVICE DIAGNOSTICS**

DIAGNOSTISCHES SYSTEM FÜR EINE PROZESSSTEUERVORICHTUNG BASIERT AUF
WIEDERSTANDSMESSUNG

DIAGNOSTIC A BASE DE RESISTANCE POUR UN DISPOSITIF DE COMMANDE DE PROCESSUS

(84) Designated Contracting States:
**CH DE GB LI**

(30) Priority: **21.08.1998 US 138446**

(43) Date of publication of application:
**13.06.2001 Bulletin 2001/24**

(73) Proprietors:
- **ROSEMOUNT INC.**
  **Eden Prairie, MN 55344 (US)**
- **MICRO MOTION INCORPORATED**
  **Boulder Colorado 80301 (US)**

(72) Inventors:
- **ERYUREK, Evren**
  **Minneapolis, MN 55410 (US)**
- **WARRIOR, Jogesh**
  **Mountain View, CA 94040 (US)**
- **PATTEN, Andrew, T.**
  **Louisville, CO 80027 (US)**

(74) Representative:
**Cross, Rupert Edward Blount et al
BOULT WADE TENNANT,
Verulam Gardens
70 Gray's Inn Road
London WC1X 8BT (GB)**

(56) References cited:
**WO-A-98/20469          DE-A- 4 008 560
US-A- 4 399 824          US-A- 5 269 311
US-A- 5 708 585**

- **TAYLOR H R ET AL: "A
  MICROCOMPUTER-BASED INSTRUMENT FOR
  APPLICATIONS IN PLATINUM RESISTANCE
  THERMOMETRY" JOURNAL OF PHYSICS E.
  SCIENTIFIC INSTRUMENTS, vol. 16, no. 11, 1
  November 1983 (1983-11-01), pages 1100-1104,
  XP002051710**

**Description**

BACKGROUND OF THE INVENTION

The present invention relates to equipment of the type used in the process control industry. More specifically, the invention relates to diagnostics for process control device in which the diagnostics is a function of a resistance.

Process control devices are used to monitor process variables and control industrial processes. For example, a process control transmitter might monitor temperature and transmit such information back to a control room. Furthermore, a process controller such as a valve controller is used to control the process.

As sensors control elements or other components, or are subjected to harsh environmental conditions, the accuracy of the system tends to degrade. It is possible to compensate for this degradation by periodically recalibrating the device. Typically, this requires an operator to enter the field and perform a calibration process on-site on the device. This is both inconvenient and time consuming for the operator. Further, it is difficult to determine the condition of a device, prior to its ultimate failure.

It is also necessary for the device or their components to be periodically replaced as they age. However, it is difficult to determine precisely when such replacement is necessary. Therefore, components are typically replaced well before their failure or, in some cases, they may fail unexpectedly requiring an unscheduled system shutdown.

SUMMARY OF THE INVENTION

The invention is defined by independent claims 1, 10 and 16.

A device in a process control system includes an electrical element which has a resistance. Self heating circuitry coupled to the element provides a self heating signal related to the resistance of the electrical element. Diagnostic circuitry provides an output as a function of the self heating signal output, for example, a residual life estimate of the element or a calibration output.

BRIEF DESCRIPTION OF THE DRAWINGS

Figure 1 shows a process control system including a transmitter in accordance with the present invention.
Figure 2 is a block diagram of a transmitter of the present invention.
Figure 3 is a simplified block diagram of a transmitter in accordance with one embodiment of the invention.

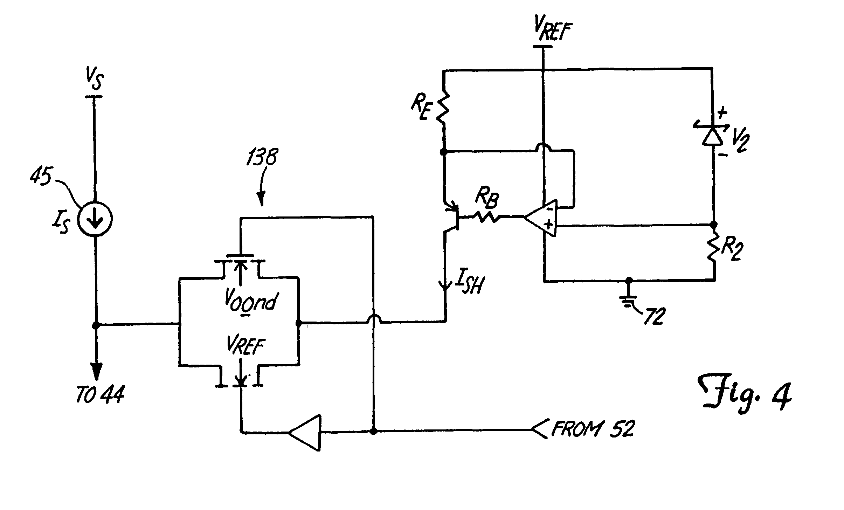

Figure 4 is a simplified block diagram in accordance with an embodiment of the present invention.
Figure 5 is a simplified block diagram of a process control device in accordance with the invention.
Figure 6 is a simplified diagram of a coriolis flowmeter in accordance with one embodiment of the invention.

DETAILED DESCRIPTION OF THE PREFERRED EMBODIMENTS

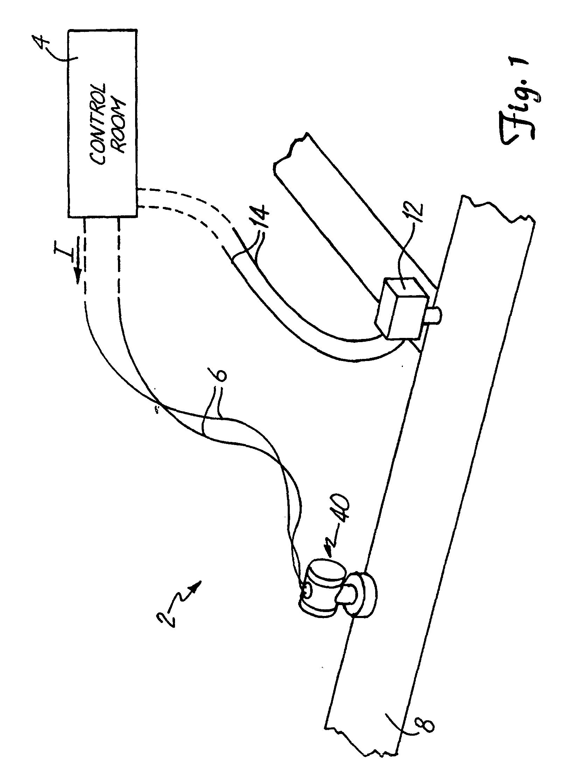

Figure 1 is a diagram of process control system 2 including field mounted temperature transmitter 40 and a valve controller 12 coupled electrically to control room 4 over a two wire process control loops 6 and 14, respectively. Transmitter 40, mounted on a manifold and connected to the pipe via a manifold, monitors the process variable of process fluid in process piping 18. The present invention applies to any electrical element in a process control device. Examples of process variable sensors which include a resistance includes sensors for pressure, flow, pH, turbidity, level, etc. In one embodiment, transmitter 40 is a temperature transmitter which transmits temperature information to control room 4 over loop 6 by controlling the current flowing through loop 6. For example, the current f lowing through loop 6 may be controlled between 4 and 20 mA and properly calibrated to indicate temperature. Additionally or in the alternative, transmitters in accordance with the invention may transmit digital information related to temperature over loop 6 to control room 4 such as in a HART® or an all digital protocol such as Fieldbus. Transmitter 40 includes circuitry described herein in more detail which provides advanced diagnostics related to sensor operation.

One aspect of the present invention includes a recognition of a close correlation, in some cases linear relationship, of the self heating (SH) index to the "alpha" of an RTD sensor. As is known, the alpha of a sensor is related to sensor calibration and therefore to sensor lifetime. Accordingly, if the SH index is measured, the lifetime of the sensor can be estimated. Furthermore, the sensor output can be corrected in real-time as a function of the amount of degradation (e.g., the difference between a preselected value of the SH index and the true current value of the SH index). This provides an autocorrection to the transmitter output.

One aspect of the invention includes a new technique for determining the SH index of a resistive element in a transmitter. Typically, prior art self heating index measurement was performed by monitoring temperature change in the element due to an applied current. However, in a process control device it is impractical to perform such a measurement due to power limitations and the necessity of a separate temperature measurement. An embodiment of the present invention includes defining the self heating index as the change in resistance of an electrical element for a given change in the power input to the element. This technique is preferable for a process control device because it does not require the resistive element to be calibrated to temperature. Furthermore, the technique does not require the element to be removed from the process such that real-time data can be collected without the trouble and cost of interrupting the process. The self heating index can be calculated in a process control device by applying two different input currents $I_1$, $I_2$ for example, 5 mA and 15mA to the electrical element. The resulting voltages across the resistance are measured and the resistance of the element is calculated at the two different currents using, for example, the equation R = V/I. The power $P_1$, $P_2$ applied to the element is determined at the two different currents as P = I·V. The self heating index is calculated in accordance with equation 1:

$$SHI = \frac{R_1 - R_2}{P_1 - P_2} \qquad \text{Eq. 1}$$

The invention can be practiced in any of a number of places in a process system control system. In particular, the present invention as realized in software and a microprocessor, can reside in a central controller or a final control element such as a valve, motor or switch. Furthermore, modern digital protocols such as Fieldbus, Profibus and others allow for the software which practices the present invention to be communicated between elements in a process control system, and also provide for process variables to be sensed in one transmitter and then sent to the software.

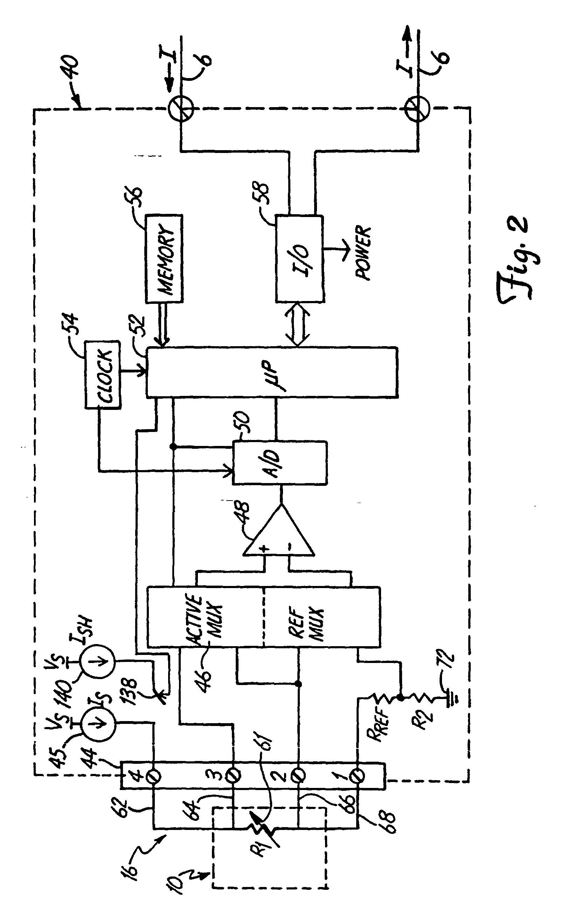

Figure 2 is a simplified block diagram of the invention implemented in a temperature transmitter 40 connected to RTD temperature sensor 10. Transmitter 40 includes terminal block 44, current source 45, multiplexer 46, differential amplifier 48, high accuracy A/D converter 50, microprocessor 52, clock circuit 54, memory 56 and input-output circuit 58.

Terminal block 44 includes terminals 1 through 5 for coupling to, for example, RTD temperature sensor 10. Sensor 10 can be either internal or external to transmitter 40. Sensor 10 includes RTD sensor element 61 having a resistance $R_1$ which varies with changes in the ambient temperature. Leads 16 include four element leads 62, 64, 66 and 68. Lead 62 is connected between sensor element 61 and terminal 4, lead 64 is connected between sensor element 61 and terminal 3, lead 66 is connected between sensor element 61 and terminal 2, and lead 68 is connected between sensor element 61 and terminal 1.

Current source 45 is connected to terminal block 44 and supplies a measurement current $I_S$ through terminal 4, sensor element 61, terminal 1, reference resistance $R_{REF}$, pull-down resistance $R_2$ and ground terminal 72. Sensor element 61 develops a voltage drop across terminals 2 and 3 which is a function of the resistance $R_1$ and thus the temperature of sensor element 61. Reference resistor $R_{REF}$ is connected between terminal 1 and pull-down resistor $R_2$.

Multiplexer 46 is divided into two sections, an active multiplexer having an output connected to the non-inverting input of differential amplifier 48 and a reference multiplexer having an output connected to the inverting input of differential amplifier 48. Microprocessor 52 controls multiplexer 46 to multiplex appropriate sets of analog signals, including signals from terminals 1 through 3, to the non-inverting and inverting inputs of differential amplifier 48. Differential amplifier 48 has an output connected to A/D converter 50. In one embodiment, A/D converter 50 has an accuracy of 17 bits and a conversion rate of 14 samples/second. A/D converter 50 converts the voltage at the output of differential amplifier 48 into a digital value and provides that value to microprocessor 52 for analysis or for communication over process control loop 6 through input-output circuit 58.

Input-output circuit 58, in a preferred embodiment, includes a HART® communication section, a FIELDBUS communication section and a 4-20 mA analog loop section for analog or bi-directional digital communicating over loop 6 according to a selected protocol in a known manner. Other protocols can also be used, for example, a four-wire configuration may be employed in which power is received from a separate source. Loop 6 also provides power to the various components of transmitter 40 through input-output circuit 58. Preferably, transmitter 40 is wholly (completely) powered by the two-wire loop 6.

Memory 56 stores instructions and information for microprocessor 52, which operates at a speed determined by clock circuit 60. Clock circuit 60 includes a real time clock and a precision high speed clock, which are also used to sequence the operation of A/D converter 50. Microprocessor 52 performs several functions, including control of multiplexer 46 and A/D converter 50, control of communications over loop 6, temperature compensation, storage of transmitter configuration parameters and performing sensor diagnostics.

Microprocessor 52 employs the following equation to compute the temperature of RTD sensor element 61:

$$R_1 = \frac{V_{R1}}{V_{RREF}}(R_{REFNOM}) \qquad \text{Equation 2}$$

where:

R$_1$ =  resistance of RTD sensor element 61;

V$_{R1}$ =  voltage drop across the RTD sensor element 61;

V$_{RREF}$ =  voltage drop across resistance R$_{REF}$; and

R$_{REFNOM}$ =  nominal resistance of the reference resistance R$_{REF}$ in Ohms, and/or stored in memory 56.

Microprocessor 52 measures the voltage drop V$_{R1}$ across RTD sensor element 61 between terminals 2 and 3, and the voltage drop (V$_{RREF}$) across reference resistance R$_{REF}$ with multiplexer 46. In a four-wire resistance measurement such as the one shown in Figure 2, the voltage drop across the connections to terminals 2 and 3 is largely eliminated, since substantially all of the current I$_S$ flows between terminals 1 and 4, and has little impact on the accuracy of the measurement. Microprocessor 52 converts the measured resistance R$_1$ into temperature units with a look-up table or suitable equations stored in memory 30. For example, one such equation is the Callender-Van Dusen equation which is:

$$R(t) = R_0\left\{1+\alpha\left(t-\delta\left(\frac{t}{100}\right)\left(\frac{t}{100}-1\right)-\beta\left(\frac{t}{100}-1\right)\left(\frac{t}{100}\right)^3\right)\right\} \qquad \text{Eq. 3}$$

Where:

R(t) =  Resistance at temperature t, in Ohms.

R$_0$ =  Resistance at temperature O, Ohm.

t =  Temperature, deg C.

$\alpha$, $\delta$, $\beta$ =  Calibration constants.

$\beta$ =  0 for t>0 deg C.

However, both stored lookup tables or the equation 2 must be properly calibrated for a particular RTD temperature sensor. Further, such calibration tends to change over time as the alpha ($\alpha$) for the sensor drifts. Calibrating an RTD requires an accurate thermometer reference to obtain a number of correct temperature values in order to accurately determine the constants $\alpha$, R$_0$ and $\delta$. Equation 3 and transmitter calibration are discussed in PRT Handbook Bulletin 1042, dated February 1985, published by Rosemount and incorporated by reference into this application.

The SH index is calculated when microprocessor 52 actuates switch 138 to couple current source 140 to sensor 61. P$_1$ and R$_1$ of equation 1 are calculated with current I$_{SH}$ from source 140 flowing through sensor 61. Microprocessor 52 determines P$_2$ and R$_2$ due to current I$_S$ from source 45. The SH index is calculated using equation 1. If transmitter 40 is completely powered from loop 6, the currents I$_{SH}$ and I$_S$ are limited to the current I in loop 6, less any current required to operate circuitry in transmitter 40.

Microprocessor 52 performs diagnostics related to operation of transmitter 40 using the SH index. The following describes a number of embodiments for realizing the diagnostic circuitry in transmitter 40. Such diagnostics include determining sensor health, performing a residual lifetime estimate may be representative of an impending sensor failure, or performing an autocorrection to the temperature measurement.

Another aspect of the present invention includes the use of the self heating index to correct the temperature measurement to reduce errors due to drift in alpha ($\alpha$) and R$_0$. As the RTD sensor ages, the constant alpha ($\alpha$) and R$_0$ (given in equation 2) for the sensor, changes thereby causing inaccuracies in the temperature measurements. It has been discovered that there is a substantially linear relationship between the SH index and error in the temperature measurement caused by drift in alpha ($\alpha$) and R$_0$. The temperature can be corrected using the equation:

$$T_{corrected} = T_{measured} \cdot \Delta SHI \cdot K \qquad \text{Eq. 4}$$

where:

T$_{measured}$ is the measured temperature;

K is a constant of proportionality;

$\Delta$SHI is the change in the self heating index; and

T$_{corrected}$ is the autocorrected temperature.

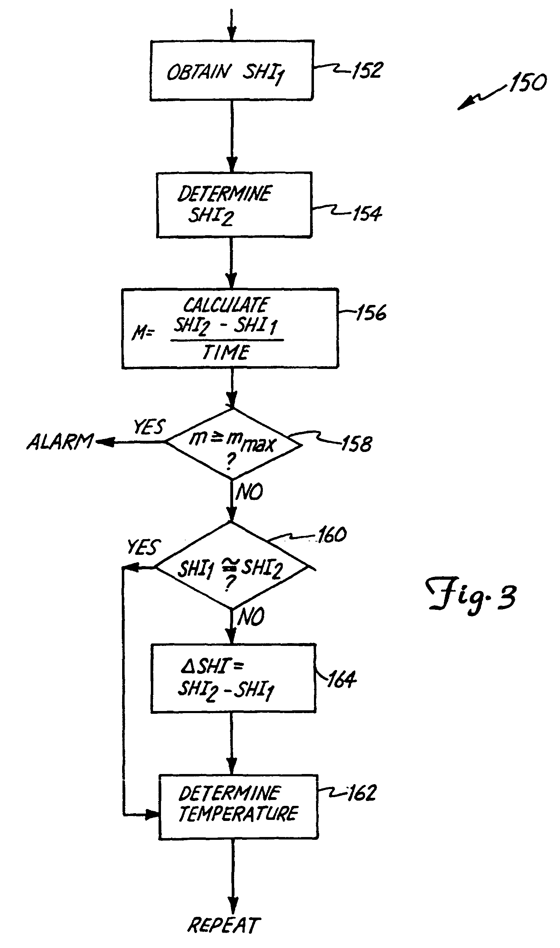

Figure 3 is a block diagram 150 illustrating the present invention as it relates to autocorrection the temperature output as a function of the SH index. Diagram 150 shows operations which would typically be performed by microprocessor 52 in Figure 2. At block 152, the previous value of the self heating index ($SHI_1$) is obtained, for example, from memory 56. This value may have been stored in memory during manufacture, previously generated by microprocessor 52 or determined and stored when the transmitter was commissioned or even at a preselected time during operation of transmitter 40. At block 154 the current value of the SH index ($SHI_2$) is determined by microprocessor 52. If the rate of change, m is greater than or equal to a maximum allowable rate of change ($m_{MAX}$), decision block 158 provides an alarm output. In general, a value representative of the difference between $SHI_2$ and $SHI_1$ is assessed at block 156. A preferred method for this differencing function is to calculate the slope over time of the two SHI values. However, other methods of assessing the amount of difference, some as simple as comparing $SHI_2$ to a threshold value, can be implemented without block 156. The output may be transmitted, for example, over loop 6 to indicate that the sensor has degradated to such an extent that failure is imminent and replacement is necessary. Other types of diagnostics may also be performed such as those set forth in the parent application U.S. Serial No. 08/744,980, filed November 7, 1996. The value of $m_{MAX}$ is stored in memory 56 and may be user configurable based upon the accuracy desired for a particular process. The alarming function at block 158 is optional, but preferred to the present invention.

If the alarm condition does not exist, control passes to decision block 160 in which the measured self heating index ($SHI_2$) is compared with the stored self heating index ($SHI_1$). If they are approximately the same, control is passed to block 162 and the temperature is determined. If, on the other hand, there is a difference between the two values, a new value for the $\Delta$SHI in equation 4 is calculated by microprocessor 52 at block 164. Further, other more complex curve fitting techniques can be used to correlate SHI with sensor calibration. Control is passed to block 162 and the new value for ASHI in equation 4 is used in determining temperature. The new value for $\Delta$SHI is stored in memory to replace the previous value.

The various functions set forth in Figure 3 may be performed remotely, in a process control device, in the control room, in a computer located off-site or in a combination of these locations. Generally, the invention can be practiced in any of a number of places in a process system control system. For example, the present invention as realized in software and a microprocessor, can reside in a central controller or even a final control element such as a valve, motor or switch as shown in Figure 1. Furthermore, modern digital protocols such as Fieldbus, Profibus and others allow for the software which practices the present invention to be communicated between elements in a process control system, and also provide for process variables to be sensed in one transmitter and then sent to the software.

One embodiment of diagnostic circuitry in the present invention uses empirical models or polynomial curve-fitting which are functions of SH index. For example, a polynomial which is a function of the SH index is used for computing the residual lifetime estimate. The constants and/or the equations may be sent over the two wire loop to transmitter 40. Another diagnostic circuit is implemented with a multi-layer neural network. Although a number of training algorithms can be used to develop a neural network model for different goals, one embodiment includes the known Backpropagation Network (BPN) to develop neural network modules which will capture the nonlinear relationship among a set of input and outputs(s).

Another embodiment of diagnostic circuitry 52 uses a set of if - then rules to reach a conclusion on the status of the temperature sensor RTD 61. The SH index is monitored and its present value is compared to upper and lower boundaries. The upper and lower boundaries are empirically set by testing of many RTD sensors. A decision is made based upon the comparison.

In another aspect of the invention, the rate of change (ROC) of the SH index is correlated with life expectancy of sensor 61. The ROC of the SH index is provided to the diagnostic circuitry implemented in microprocessor 52 which provides an output indicative of expected life, including a warning when the expected remaining sensor life has dropped below a minimum value.

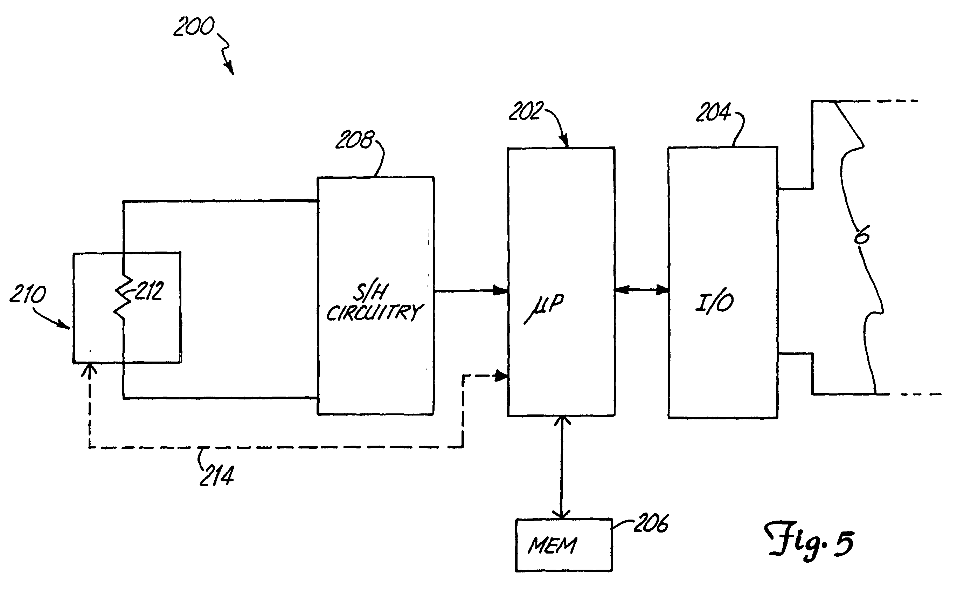

Figure 5 is a simplified block diagram of a process control device 200 in accordance with more general aspects of the present invention coupled to process control loop 6. Device 200 may be any type of process control device with an electrical element with a measurable resistance. Transmitter 40 of Figure 1 is one example of instrument 202. Device 200 includes microprocessor 202 coupled to loop 6 through I/O circuitry 204 and to a memory 206. Self heating circuitry 208 couples to a process control element 210 and provides a self heating signal to microprocessor 202. Process control element 210 includes a resistance element 212 having an electrical resistance for which a self heating value is determined by self heating circuitry 208 using the techniques in accordance with the invention. The connection to resistance 212 may be through a four point Kelvin connection to obtain more accurate measurements. A dashed line is shown between element 210 and microprocessor 202. Line 214 is representative of, for example, any connection or exchange of signals between element 210 and microprocessor 202. For example, if element 210 is a process variable sensor, connection 214 provides process variable data to microprocessor 202. Similarly, if element 210 is a control element, connection 214 provides a control input from microprocessor 202 to element 210. One aspect of the invention includes the use of self heating diagnostic techniques to perform diagnostics on any type of process control element. For example, as used herein, a "process control element" includes any element in a process (a transmitter, RTD, strain gauge, pick up or drive coil, etc.) which has a resistance. Process control devices include devices for measuring flowmeters (coriolis, magnetic, vortex, differential pressure, etc.) pressure, level, pH, turbidity temperature, etc. as well as control devices such as valve actuators, solenoids, etc. Some examples of process control elements include RTD 61 described above, as well as electrical coils, wiring which couples to sensors, terminations, terminal blocks, strain gauges or other types of sensors, actuators or other electrical components.

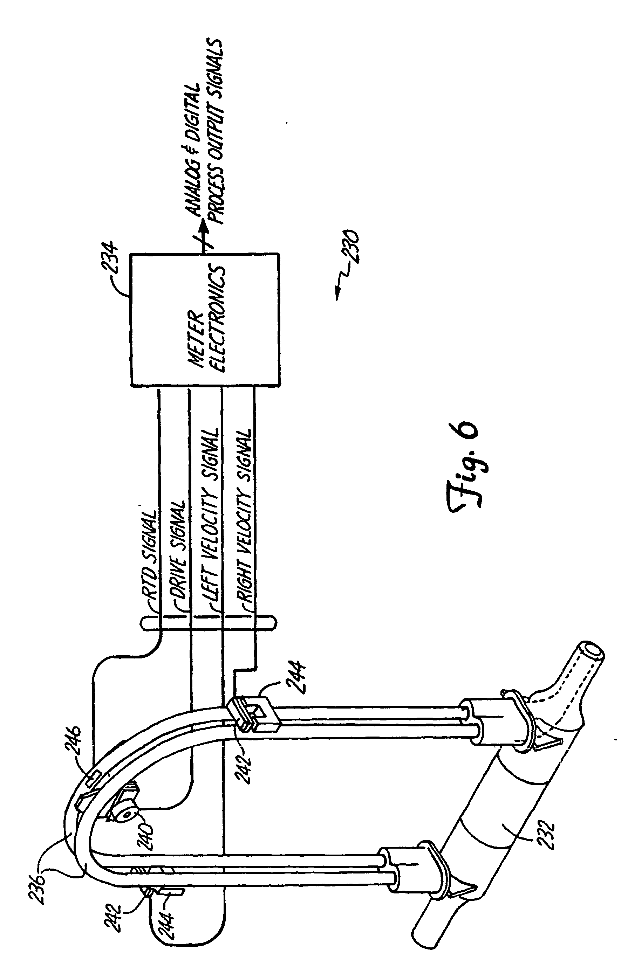

Device 200 may comprise a coriolis flowmeter such as is described in U.S. Patent No. 5,231,884 issued August 3, 1993 in which process control element 210 is the coil used in a velocity sensor or a driver. For example, Figure 6 is a simplified block diagram of coriolis flowmeter 230 in accordance with one embodiment of the present invention which includes a flow tube 232 and meter electronics 234. Measurement tubes 236 couple to flow tube 232, a drive coil 240 in a drive element vibrates tubes 236 in response to a drive signal and sense elements which include sense coils 242 and sense magnets 244 provide left and right velocity signals related to the resultant vibration of tubes 236. An RTD temperature sensor 246 provides an RTD signal related to the temperature of tube 236. Diagnostics circuitry of the present invention included in coriolis flowmeter 230 may be used to monitor coils 240 or 242 or RTD sensor 246 and responsively provide a diagnostic output.

Thus, the present invention can detect various types of failures in process device including corrosion of an electrical component. For example, in a wire, termination, coil, RTD, thermocouple, electrical trace on a printed circuit board or other electrical component which corrodes over time, there is a corresponding reduction in area which causes an increase in resistance. The present invention can detect such degradation prior to the ultimate failure of the device. Electrical components may degrade due to multiple uses which could also lead to eventual fatigue failure. The self heating techniques of the present invention can detect such fatigue. Further, a loose termination such as occurs with a "cold" solder joint can be detected as the termination degrades.

Examples of various failures which may be detected using the present invention include a break in a coil winding, a termination or poor solder joint, a damaged trace on a circuit board, a poor wire wrap termination, a error in soldering, a poor connector damaged to a wire or component due to handling, damage to a wire component due to temperature cycling. Referring back to Figure 3, such a failure may be detected, for example, at block 158 in which the change in self heating index ($\Delta$SHI) may be compared with a threshold and used to indicate a failure mode. In another aspect of the invention, the diagnostic output is used to compensate for the degradation in the electrical element. For example, the output from a sensor may be compensated as well as the input signal provided to a control element.

Although the present invention has been described with reference to preferred embodiments, workers skilled in the art will recognize that changes may be made in form and detail without departing from the invention.

## Claims

1. A process control device in a process control system, comprising:

   an electrical element having an electrical resistance;
   process control device circuitry coupled to the electrical element to perform a process control function;
   self heating circuitry coupled to the electrical element providing a self heating signal related to a self heating (SH) index of the electrical element due to its electrical resistance;
   circuitry coupled to a process control loop for coupling the device to the loop; and
   diagnostic circuitry coupled to the self heating circuitry responsively providing a diagnostic output related to health of the electrical element as a function of the self heating signal.

2. The device of Claim 1 including a memory storing at least one expected result related to the self heating signal.

3. The device of Claim 1 or Claim 2 wherein the diagnostic circuitry comprises a neural network and/or regression models.

4. The device of any one of Claims 1 to 3 wherein the diagnostic output is related to a residual lifetime estimate for the electrical element.

5. The device of Claim 4 wherein the diagnostic circuitry determines the residual lifetime estimate as a function of rate of change (ROC) of the self heating signal.

6. The device of any one of Claims 1 to 5 wherein the self heating circuitry includes a current source and voltage measurement circuitry.

7. The device of any one of Claims 1 to 6 wherein the self heating circuitry determines the SH index as a function of a change in resistance of the electrical element in response to to a change in power applied to the electrical element.

8. The device of any one of Claims 1 to 7 wherein the output circuitry calibrates the electrical element as a function of the self heating signal.

9. The device of any one of Claims 1 to 8 wherein the electrical element is a coil and the coil comprises a sensor in or a driver of a coriolis flowmeter.

10. A device for use in a process control system comprising:

I/O circuitry adapted to be coupled to a process control loop;
an electrical element having a resistance;
a current source coupled to the electrical element to inject a current into the electrical element;
voltage measurement circuitry coupled to the electrical element providing an output related to voltage drop across the electrical element; and
diagnostic circuitry providing a self heating (SH) index output, indicative of the health of the electric element, as a function of injected current and the voltage, drop across the electrical element due to its resistance.

11. The device of Claim 10 wherein the diagnostic circuitry provides a life expectancy output of the electrical element as a function of the SH index.

12. The device of Claim 10 or Claim 11 including measurement circuitry providing an output related to a process variable as a function of an output from the electrical element and the SH index.

13. The device of any one of Claims 1 to 12 wherein the SH index is determined as a function of a change in resistance of the electrical element in response to a change in power applied to the electrical element.

14. The device of Claim 13 wherein the SH index is calculated as $(R_1-R_2)/(P_1-P_2)$. where $R_1$ and $R_2$ are values of resistance of the element at two different currents $I_1$, $I_2$ and corresponding measured voltages, and $P_1$ and $P_2$ are the values of power so applied to the element and determined at currents $I_1$, $I_2$ respectively.

15. The device of any one of Claims 1 to 14 wherein the electrical element comprises a strain gauge, a control element, a sense element, a coil and/or a thermocouple.

16. A method for diagnosing an electrical element in a process control device, comprising:

obtaining a self heating (SH) index for an electrical element of the device, the electrical element having a resistance;
providing an electrical element diagnostic output as a function of the SH index.

17. The method of Claim 16 wherein obtaining the SH index comprises measuring change in resistance of the electrical element in response to a change in power applied to the electrical element.

18. The method of Claim 16 or Claim 17 wherein the SH index is calculated as $(R_1-R_2)/P_1-P_2)$ where $R_1$ and $R_2$ are values of resistance of the element at two different currents $I_1$, $I_2$ and corresponding measured voltages, and $P_1$ and $P_2$ are the values of power so applied to the element and determined at currents $I_1$, $I_2$ respectively.

19. The method of any one of Claims 16 to 18 including estimating residual life of the electrical element based upon a rate of change of the SH index.

20. The method of Claim 19 wherein obtaining the SH index includes sequentially injecting at least two different current levels into the electrical element and measuring the resultant voltage drop across the electrical element.

21. The method of any one of Claims 16 to 20 including determining life expectancy of the electrical element as a function of the diagnostic output.

22. The method of any one of Claims 16 to 21 including calibrating the electrical element as a function of the SH index.

**EP 1 105 781 B1**

**Patentansprüche**

1. Eine Prozesssteuervorrichtung in einem Prozesssteuersystem, die Folgendes aufweist:

   - ein elektrisches Element mit einem elektrischen Widerstand;

   - eine Prozessregeleinrichtungsschaltung, die mit dem elektrischen Element verbunden ist, um so eine Prozessregelungsfunktion auszuüben;

   - eine Selbsterwärmungsschaltung, die mit dem elektrischen Element verbunden ist, und in Verbindung mit einem Selbsterwärmungsindex des elektrischen Elements aufgrund dessen elektrischem Widerstand ein Selbsterwärmungssignal erzeugt;

   - eine Schaltung, die mit einem geschlossenen Prozessregelkreis verbunden ist, und die Einrichtung mit dem Regelkreis verbindet; und

   - eine Fehlerdiagnoseschaltung, die mit der Selbsterwärmungsschaltung verbunden ist, und ansprechend hierauf eine Fehlerdiagnoseausgabe über den Zustand des elektrischen Elements als eine Funktion des Selbsterwärmungssignals zurück liefert.

2. Vorrichtung nach Anspruch 1, die außerdem einen Speicher umfasst, in dem mindestens ein in Verbindung mit dem Selbsterwärmungssignal erwartetes Ergebnis gespeichert wird.

3. Vorrichtung nach Anspruch 1 oder Anspruch 2, wobei die Fehlerdiagnoseschaltung ein neuronales Netz und/oder Regressionsmodelle umfasst.

4. Vorrichtung nach einem der Ansprüche 1 bis 3, wobei die Fehlerdiagnoseausgabe mit einer Schätzung über die verbleibende Lebensdauer des elektrischen Elements in Verbindung steht.

5. Vorrichtung nach Anspruch 4, wobei die Fehlerdiagnoseschaltung die Schätzung über die verbleibende Lebensdauer als eine Funktion der Änderungsgeschwindigkeit (ROC) des Selbsterwärmungssignals vornimmt.

6. Vorrichtung nach einem der Ansprüche 1 bis 5, wobei die Selbsterwärmungsschaltung eine Stromquelle sowie eine Spannungsmessschaltung umfasst.

7. Vorrichtung nach einem der Ansprüche 1 bis 6, wobei die Selbsterwärmungsschaltung den Selbsterwärmungsindex als eine Funktion der Änderung des Widerstandes des elektrischen Elements ansprechend auf eine Änderung des an das elektrische Element angelegten Stroms festlegt.

8. Vorrichtung nach einem der Ansprüche 1 bis 7, wobei die Ausgangsschaltung das elektrische Element als eine Funktion des Selbsterwärmungssignals kalibriert.

9. Vorrichtung nach einem der Ansprüche 1 bis 8, wobei das elektrische Element eine Spule ist, und die Spule einen Sensor in einem oder einen Antrieb eines Coriolis-Durchflussmessers enthält.

10. Vorrichtung zur Verwendung in einem Prozesssteuersystem, die Folgendes aufweist:

    - eine Ein- und Ausgabeschaltung, die mit einem geschlossenen Prozessregelkreis verbunden werden kann;

    - ein elektrisches Element mit einem Widerstand;

    - eine Stromquelle, die mit dem elektrischen Element verbunden ist, um so einen Strom in das elektrische Element einzubringen;

    - eine Spannungsmessschaltung, die mit dem elektrischen Element verbunden ist, um so eine Ausgabe in Verbindung mit dem Spannungsabfall über dem elektrischen Element zu erzeugen; und

    - eine Fehlerdiagnoseschaltung, die eine Ausgabe des Selbsterwärmungsindex als eine Funktion des eingebrachten Stroms und des Spannungsabfalls über dem elektrischen Element aufgrund seines Widerstands zu erzeugt, welche Ausgabe den Zustand des elektrischen Elements anzeigt.

11. Vorrichtung nach Anspruch 10, wobei die Fehlerdiagnoseschaltung eine Ausgabe der erwarteten Lebensdauer des elektrischen Elements als eine Funktion des Selbsterwärmungsindex erzeugt.

12. Vorrichtung nach Anspruch 10 oder Anspruch 11, einschließlich einer Messschaltung, die eine Ausgabe in Verbindung mit einer Prozessgröße als eine Funktion einer Ausgabe des elektrischen Elements und des Selbsterwärmungsindex erzeugt.

13. Vorrichtung nach einem der Ansprüche 1 bis 12, wobei der Selbsterwärmungsindex als eine Funktion einer Änderung des Widerstands des elektrischen Elements als Reaktion auf eine Änderung des an das elektrische Element angelegten Stroms festgelegt wird.

14. Vorrichtung nach Anspruch 13, wobei der Selbsterwärmungsindex berechnet wird als $(R_1-R_2)/(P_1-P_2)$, mit $R_1$, $R_2$ = Widerstandswerte des Elements bei zwei unterschiedlichen Stromstärken $I_1$, $I_2$, und den entsprechenden gemessenen Spannungen $P_1$, $P_2$ = Werte der so an dem Element anliegenden und bei den Stromstärken $I_1$ bzw. $I_2$ festgestellten Leistung.

15. Vorrichtung nach einem der Ansprüche 1 bis 14, wobei das elektrische Element einen Dehnungsmesser, ein Regelglied, einen Detektor, eine Spule und/oder ein Thermoelement enthält.

16. Verfahren zur Fehlerdiagnose bei einem elektrischen Element in einer Prozesssteuervorrichtung, das Folgendes aufweist:

   - Ermittlung eines Selbsterwärmungsindex für ein elektrisches Element der Vorrichtung, wobei das elektrische Element einen Widerstand hat;

   - Erzeugung einer Fehlerdiagnoseausgabe für das elektrische Element als eine Funktion des Selbsterwärmungsindex.

17. Verfahren nach Anspruch 16, wobei die Ermittlung des Selbsterwärmungsindex das Messen der Änderung des Widerstandes des elektrischen Elements als Reaktion auf eine Änderung des an dem elektrischen Element anliegenden Stroms aufweist.

18. Verfahren nach Anspruch 16 oder Anspruch 17, wobei der Selbsterwärmungsindex berechnet wird als $(R_1-R_2)/(P_1-P_2)$, mit $R_1$, $R_2$ = Widerstandswerte des Elements bei zwei unterschiedlichen Stromstärken $I_1$, $I_2$, und den entsprechenden gemessenen Spannungen $P_1$, $P_2$ = Werte der so an dem Element anliegenden und bei den Stromstärken $I_1$ bzw. $I_2$ festgestellten Leistung.

19. Verfahren nach einem der Ansprüche 16 bis 18, einschließlich einer Schätzung der verbleibenden Lebensdauer des elektrischen Elements auf Grund einer Änderungsgeschwindigkeit des Selbsterwärmungsindex.

20. Verfahren nach Anspruch 19, wobei zur Ermittlung des Selbsterwärmungsindex gehört, dass nacheinander mindestens zwei Ströme unterschiedlicher Stromstärken in das elektrische Element eingebracht werden und der daraus resultierende Spannungsabfall über dem elektrischen Element gemessen wird.

21. Verfahren nach einem der Ansprüche 16 bis 20, einschließlich der Festlegung der erwarteten Lebensdauer des elektrischen Elements als eine Funktion der Fehlerdiagnoseausgabe.

22. Verfahren nach einem der Ansprüche 16 bis 21, einschließlich. Kalibrieren des elektrischen Elements als eine Funktion des Selbsterwärmungsindex.

**Revendications**

1. Un dispositif de contrôle de processus dans un système de contrôle de processus, comportant :

un élément électrique ayant une résistance électrique ;

un système de circuit du dispositif de contrôle de processus, couplé à l'élément électrique pour réaliser une fonction de contrôle du processus ;

un système de circuit à échauffement spontané couplé à l'élément électrique procurant un signal à échauffement spontané apparenté à un indice d'échauffement spontané (SH) de l'élément électrique, dû à la résistance électrique ;

un système de circuit couplé à une boucle de contrôle de processus pour coupler le dispositif à la boucle ; et

un système de circuit de diagnostic couplé à un système de circuit à échauffement spontané, qui, en réponse, fournit une sortie de diagnostic apparentée à la sortie de l'élément électrique en tant que fonction du signal à échauffement spontané.

2.  Le dispositif de la revendication 1, comportant une mémoire stockant au moins un résultat attendu se rapportant au signal d'échauffement spontané.

3.  Le dispositif de la revendication 1 ou de la revendication 2, dans lequel le système de circuit de diagnostic comporte un modèle nerveux cérébral et/ou des modèles de régression.

4.  Le dispositif de l'une quelconque des revendications 1 à 3, dans lequel la sortie de diagnostic est apparentée à une estimation de la durée de vie résiduelle pour l'élément électrique.

5.  Le dispositif de la revendication 4, dans lequel le système de circuit de diagnostic détermine l'estimation de la durée de vie résiduelle en tant qu'une fonction du taux de modification (ROC) du signal d'échauffement spontané.

6.  Le dispositif de l'une quelconque des revendications 1 à 5, dans lequel le système de circuit d'échauffement spontané comporte une source de courant et un système de circuit de mesure de la tension.

7.  Le dispositif de l'une quelconque des revendications 1 à 6, dans lequel le système de circuit d'échauffement approprié détermine l'indice SH en tant que fonction de modification de la résistance de l'élément électrique en réponse à une modification de puissance appliquée à l'élément électrique.

8.  Le dispositif de l'une quelconque des revendications 1 à 7 dans lequel le système de circuit de sortie calibre l'élément électrique en tant que fonction du signal d'échauffement spontané.

9.  Le dispositif de l'une quelconque des revendications 1 à 8, dans lequel l'élément électrique est une bobine et la bobine comporte un détecteur ou un déclencheur d'un débitmètre à effet Coriolis.

10. Un dispositif destiné à être utilisé dans un système de contrôle de processus comportant :

un système de circuit O/F adapté pour être couplé à une boucle de contrôle de processus ;

un élément électrique ayant une résistance ;

une source de courant couplé à l'élément électrique pour injecter un courant dans l'élément électrique ;

un système de circuit de mesure de la tension, couplé à l'élément électrique fournissant une sortie apparentée à la chute de tension aux bornes de l'élément électrique ; et

un système de circuit de diagnostic procurant une sortie d'indice d'échauffement spontané (SH), indicatrice de la santé de l'élément électrique, en tant que fonction du courant injecté et de la chute de tension aux bornes de l'élément électrique qui est indicatrice de la chaleur de l'élément électrique du fait de la résistance.

11. Le dispositif de la revendication 10, dans lequel le système de circuit de diagnostic procure une sortie de durée de vie probable d'un élément électrique en tant que fonction de l'indice SH.

12. Le dispositif de la revendication 10 ou de la revendication 11, comportant un système de circuit de mesure fournissant une sortie apparentée à une variable du processus en tant que fonction d'une sortie provenant de l'élément électrique et de l'indice SH.

13. Le dispositif d'une quelconque des revendications 1 à 12, dans lequel l'indice SH est déterminé en tant que fonction d'une modification de la résistance de l'élément électrique en réponse à une modification de puissance appliquée à l'élément électrique.

**14.** Le dispositif de la revendication 13, dans lequel l'indice SH est calculé en tant que $(R_1-R_2)/(P_1-P_2)$, où $R_1$ et $R_2$ sont des valeurs de résistance de l'élément pour différents courants $I_1$, $I_2$ et les tensions correspondantes mesurées, et $P_1$ et $P_2$ sont des valeurs de puissance ainsi appliquées à l'élément et déterminées pour des courants $I_1$, $I_2$, respectivement.

**15.** Le dispositif de l'une quelconque des revendications 1 à 14, dans lequel l'élément électrique comporte une jauge de contrainte, un élément de contrôle, un élément capteur, une bobine et/ou un thermocouple.

**16.** Un procédé pour diagnostiquer un élément électrique dans un dispositif de contrôle d'un processus, consistant à :

obtenir un indice d'échauffement spontané (SH) pour un élément électrique du dispositif, l'élément électrique ayant une résistance,
fournir une sortie de diagnostic de l'élément électrique en tant que fonction de l'indice SH.

**17.** Le procédé de la revendication 16, dans lequel le fait d'obtenir un indice SH consiste à mesurer la modification de résistance de l'élément électrique en réponse à une modification de la puissance appliquée à l'élément électrique.

**18.** Le procédé de la revendication 16 ou de la revendication 17, dans lequel l'indice SH est calculé en tant que $(R_1-R_2)/(P_1-P_2)$, où $R_1$ et $R_2$ sont des valeurs de résistance de l'élément pour différents courants $I_1$, $I_2$ et les tensions correspondantes mesurées, et $P_1$ et $P_2$ sont les valeurs de puissance ainsi appliquées à l'élément et déterminées pour des courants $I_1$, $I_2$, respectivement.

**19.** Le procédé de l'une quelconque des revendications 16 à 18, comportant l'estimation de la vie résiduelle de l'élément électrique en se basant sur un taux de modification de l'indice SH.

**20.** Le procédé de la revendication 19, dans lequel le fait d'obtenir l'indice SH consiste séquentiellement à injecter au moins deux niveaux de courant différents dans l'élément électrique et à mesurer la chute de tension résultante aux bornes de l'élément électrique.

**21.** Le procédé de l'une quelconque des revendications 16 à 20, comportant la détermination de la durée de vie probable de l'élément électrique en tant que fonction de la sortie de diagnostic.

**22.** Le procédé de l'une quelconque des revendications 16 à 21, comportant le calibrage de l'élément électrique en tant que fonction de l'indice SH.

Fig. 1

*Fig. 2*

OBTAIN SHI$_1$ —152

150

DETERMINE SHI$_2$ —154

CALCULATE $M = \dfrac{SHI_2 - SHI_1}{TIME}$ —156

ALARM ←—YES— $m \geq m_{max}$ ? —158

NO

YES— SHI$_1 \cong$ SHI$_2$ ? —160

*Fig. 3*

NO

$\Delta SHI = SHI_2 - SHI_1$ —164

DETERMINE TEMPERATURE —162

REPEAT

Fig. 4

Fig. 5

Fig. 6